(19) Europäisches Patentamt
European Patent Office
Office européen des brevets

(11) **EP 2 146 445 A1**

(12) **EUROPEAN PATENT APPLICATION**

(43) Date of publication:
**20.01.2010 Bulletin 2010/03**

(51) Int Cl.:
*H04B 10/158* (2006.01)

(21) Application number: **08290691.8**

(22) Date of filing: **15.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Alcatel Lucent**
**75008 Paris (FR)**

(72) Inventor: **Franz, Bernd**
**74336 Brackenheim (DE)**

(74) Representative: **MERH-IP**
**Matias Erny Reichl Hoffmann**
**Paul-Heyse-Strasse 29**
**80336 München (DE)**

(54) **Optical DQPSK receiver with phase offset compensation of delay line interferometers**

(57) The invention relates to a DQPSK receiver for optical communication. The receiver comprises a first delay line interferometer (1a), DLI, for generating a demodulated optical inphase signal component. The receiver further comprises a second DLI (1b) for generating a demodulated optical quadrature phase signal component. Further, first (3a) and second (3b) optical-to-electrical converters (O/E converters) for converting the optical inphase and quadrature signal components are provided. In addition, the receiver comprises first weightedly combining means (5a) for weightedly combining a signal (Xi) downstream of the first O/E converter (3a) and a signal (Xq) downstream of the second O/E converter (3b), thereby generating a compensated inphase signal component (Yi). Analogously, the receiver comprises second weightedly combining means (5b) for weightedly combining a signal (Xq) downstream of the second O/E converter (3b) and a signal (Xi) downstream of the first O/E converter (3a), thereby generating a compensated quadrature phase signal component (Yq). The weighting in the first (5a) and second (5b) weightedly combining means is selected to compensate unwanted phase offset in the first delay line interferometer and/or second delay line interferometer.

Fig. 2

EP 2 146 445 A1

## Description

The invention relates to optical communications, in particular to an optical DQPSK (differential quadrature phase-shift keying) receiver.

In a DQPSK receiver for optical communications, a DQPSK demodulator determines the change of the phase state of the optical carrier between two successive symbol waveforms. For measuring the phase change, a quadrature DQPSK demodulator comprises two parallel DLIs (delay line interferometer), one for the inphase component and one for the quadrature phase component.

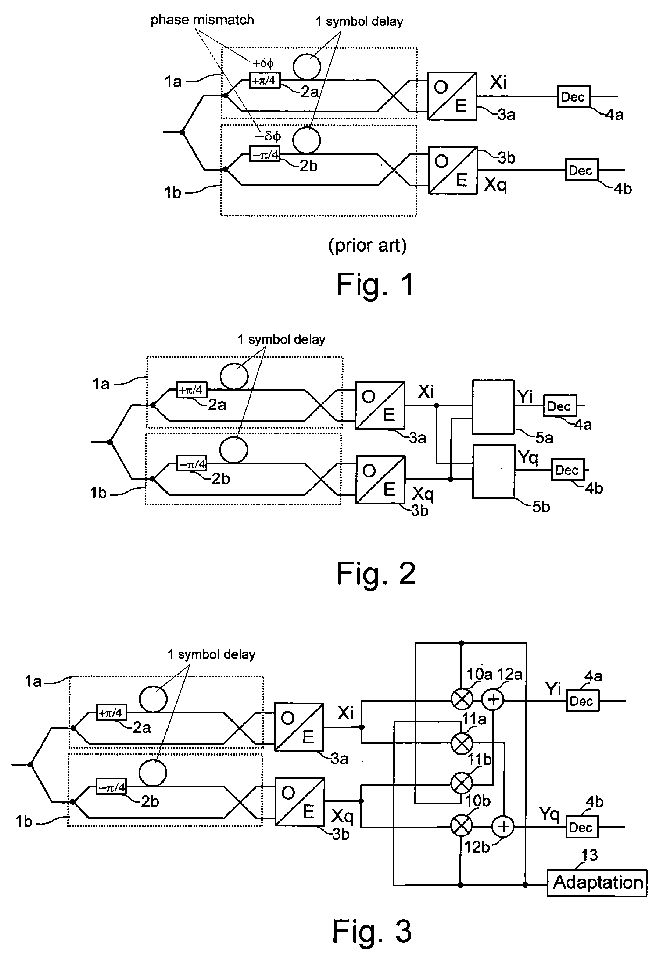

Fig. 1 shows a conventional DQPSK receiver comprising two parallel DLIs 1a and 1b, each receiving the optical signal. In each DLI 1a and 1b, the optical signal is fed into two arms, one arm (here the upper arm) having an additional delay of one symbol interval compared to the other. This may be realized by structuring one arm of each DLI longer than the other arm of the same DLI. The two beams from the two arms are then superimposed, thereby interfering in dependency of the phase change constructively or destructively. Further, for correct demodulation of the inphase and quadrature phase signal components of the signal, one arm of each DLIs 1a and 1b has an additional (positive or negative) phase delay 2a, 2b, with the phase delay 2a, 2b being different for the two DLIs 1a, 1b. The upper arm in DLI 1a may have a phase delay of $\Phi = +45°$ ($45°$ of the optical wavelength and not of the symbol length!) and the upper arm in DLI 1b may have a phase delay of $\Phi = -45°$ (see Fig. 1). In an alternative configuration (not shown), the lower arm in DLI 1a may have a phase delay of $\Phi = -45°$ and the lower arm in DLI 1b may have a phase delay of $\Phi = +45°$. In both cases, the two arms having the delays 2a, 2b exhibit a phase difference of $90°$.

In Fig. 1 each DLI 1a and 1b has a summing output and a subtracting output which correspond to the sum and the difference of the two beams, respectively. The use of two outputs per DLI is only optional, however, the difference signal between such two outputs of a DLI has a larger signal swing compared to the signal at one output. The output signals of the DLIs 1a and 1b are optically-to-electrically converted by two O/E (optical-to-electrical) converters 3a and 3b (here each O/E converter comprises two photodiodes). After separate conversion of the inphase and quadrature phase components and optional signal processing (not shown, e.g. signal equalization), the electrical inphase signal component $X_i$ and the electrical quadrature phase signal component $X_q$ are decided in two decision blocks 4a and 4b. Optionally, the decision blocks 4a and 4b may use more complex algorithms for signal decision, e.g. an algorithm for maximum-likelihood-sequence-estimation (e.g. the Viterbi algorithm).

For preventing OSNR (optical signal-to-noise ratio) penalty, the delays 2a and 2b in the DLIs 1a and 1b have to be very accurate with a tolerance of some degrees. E.g. an unwanted symmetrical total offset of $20°$ in the two delays 2a and 2b (i.e. $\delta\Phi = 10°$ offset for the delay 2a and $\delta\Phi = -10°$ for the delay 2b) results in an OSNR penalty of 1.3 dB. Such unwanted mismatch of $20°$ is equivalent to a length mismatch of roughly 60 nm in case of a wavelength $\lambda$ of 1550 nm and a refractive index n of 1.5.

Therefore, the DLIs in the DQPSK demodulator have to be manufactured with very high precision. In addition, temperature control may be required. High precision manufacturing and temperature control are cost inventive.

Therefore, it is in object of the invention to provide a DQPSK receiver which compensates the effect of such unwanted phase offsets in the DLIs of a DQPSK receiver, without the need of high precision manufacturing. It is further object of the invention to provide a corresponding DQPSK receiving method.

These objects are achieved by the DPQK receiver and the method according to the independent claims.

A first aspect of the invention relates to a DQPSK receiver for receiving an optical signal, in particular for fiber-optics communications. The receiver may be used for RZ-DQPSK transmission (RZ = return-to-zero) or NRZ-DQPSK transmission (NRZ = non-return-to-zero).

Such receiver comprises a first DLI for generating a demodulated optical inphase signal component. Further, a second DLI for generating a demodulated optical quadrature phase signal component is provided. The DQPSK receiver further comprises a first optical-to-electrical converter (O/E converter) for converting the optical inphase signal component, and a second O/E converter for converting the optical quadrature phase signal component.

The invention uses common signal processing of inphase and quadrature phase components: For compensating the effect of an unwanted phase offset in the inphase signal, the uncompensated (i.e. comprising also part of the quadrature phase component) electrical inphase signal component (I-component) and the uncompensated (i.e. comprising also part of the inphase phase component) electrical quadrature phase component (Q-component) are weightedly superimposed. If the weighting is selected properly the unwanted quadrature phase portion in the uncompensated I-component will be compensated. This applies analogously for the compensation of the Q-component.

Accordingly, the receiver comprises preferably first weightedly combining means for weightedly combining a signal downstream of the first O/E converter (e.g. the output signal of the first O/E converter) and a signal downstream of the second O/E converter (e.g. the output signal of the second O/E converter), thereby generating a compensated I-component. Analogously, the receiver comprises second weightedly combining means for weightedly combining a signal downstream of the second O/E converter (e.g. the output signal of the second O/E converter) with a signal downstream of the first O/E converter (e.g. the output signal of the first O/E converter), thereby generating a compensated Q-component. The weighting in the first and second weightedly combining means is selected to (fully or at least partially) compensate unwanted phase offset in the first DLI and/or second DLI.

Due compensation of unwanted phase offset in the first DLI and/or second DLI, the invention allows using DLIs with higher phase tolerance, which reduces the production costs of such DQPSK receiver. Moreover, even when using the same DLIs, the invention allows equalizing the effect of unwanted phase offset in the DLIs and thus allows improved signal regeneration. This allows e.g. longer transmission spans.

The weighting in the first (second) weightedly combining means may affect the two combined signals or only one of the two combined signals. The weighting of a signal may be performed by a single weight (i.e. a single multiplying unit) or by a feed forward equalizer (FFE) having a plurality of weights.

Preferably, the receiver is configured to automatically adapt the weighting in the first weightedly combining means and the weighting in the second weightedly combining means. Alternatively, the weighting may be set during manufacturing, i.e. during manufacturing the weighing in the electrical part of the assembled receiver is selected according to the actual unwanted phase offset of the used optical DQPSK demodulator.

According to a preferred embodiment, the first weightedly combining means use for weighting of the signal downstream of the second O/E converter a single weight, i.e. a single multiplying unit having a single weight. Analogously, the second weightedly combining means use for weighting of the signal downstream of the first O/E converter a single weight, i.e. a single multiplying unit having a single weight. Please note that even a multiplying unit having a single weight may have a plurality of (analog) multiplier circuits in series (the single weight corresponds to the product of the multipliers of the multiplier circuits).

As evident from simulations as discussed later on, it has been figured out that such single weights are sufficient for compensation of the DLI phase offset. For such compensation it is not necessary to have a more complex FFE having a plurality of weights for weighting of the I-component or Q-component before combining with the respective other signal component. The use of a single weight in each of the two cross paths provides the advantage of less circuit complexity compared to a solution with an FFE in each cross path, thereby also reducing the power consumption. It should be noted that the circuit complexity and power consumption of such FFE is very high at such high data rates (e.g. at 40 or 43 Gb/s or even 100 or 110 Gb/s) in fiber-optical communications.

Moreover, using simple multiplying units provides the further advantage that the adaption algorithm is simpler due to the lower number of weights.

For mitigating PMD and other optical and/or electrical distortions, the first weightedly combining means have a first FFE, filtering the signal downstream of the first optical-to-electrical converter before combination. Analogously, the second weightedly combining means may have a second FFE, filtering the signal downstream of the second optical-to-electrical converter before combination. Instead of these two FFEs, the DQPSK receiver may comprise a first multiplying unit (having a single weight) downstream of the first optical-to-electrical converter and a second multiplying unit (having a single weight) downstream of the second optical-to-electrical converter.

For adapting the weighting in the first and second weightedly combining means, an LMS algorithm or an error count signal of a FEC-unit (forward-error-correction) may be used.

Further preferred embodiments of the inventive DQPSK receiver are given in the dependent claims.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

A second aspect of the invention relates to an electrical compensation circuit for use in the DQPSK receiver as discussed above. The electrical compensation circuit comprises said first and second weightedly combining means and optionally further electrical components as discussed above. Preferably, the first weightedly combining means use a single weight for weighting of the signal downstream of the second optical-to-electrical converter and the second weightedly combining means use a single weight for weighting of the signal downstream of the first optical-to-electrical converter.

The above remarks related to the first aspect of the invention are also applicable to the second aspect of the invention.

A third aspect of the invention relates to a method for receiving an optical DQPSK signal. A demodulated optical inphase signal component is generated by feeding a first DLI. A demodulated optical quadrature phase signal component is generated by feeding a second DLI. The optical inphase signal component is optically-to-electrically converted. Analogously, the optical quadrature phase signal component is optically-to-electrically converted. The electrical inphase signal component and the electrical quadrature phase signal component are weightedly combined, thereby generating a compensated quadrature phase signal component. Analogously, the electrical quadrature phase signal component and the electrical inphase signal component are weightedly combined, thereby generating a compensated inphase signal component. As discussed above, the weighting is selected to compensate unwanted phase offset in the first DLI and/or second DLI. The above remarks related to the first aspect of the invention are also applicable to the third aspect of the invention. Preferably, when generating the compensated inphase signal component, a single weight is used for weighting of the quadrature phase signal component. Analogously, when generating the compensated quadrature phase signal component, a single weight for weighting of the inphase signal component is used.

The method may be used for a RZ-DQPSK transmission system (RZ = return-to-zero) or NRZ-DQPSK transmission system (NRZ = non-return-to-zero).

The invention is explained below in an exemplary manner with reference to the accompanying drawings, wherein

Fig. 1 illustrates a conventional DQPSK receiver;

Fig. 2 illustrates a first embodiment of the inventive DQPSK receiver;

Fig. 3 illustrates a second embodiment of the inventive DQPSK receiver;

Fig. 4 illustrates a third embodiment of the inventive DQPSK receiver;

Fig. 5 illustrates a fourth embodiment of the inventive DQPSK receiver;

Fig. 6 illustrates the simulated OSNR (optical signal-to-noise ratio) at a BER (bit error rate) of $10^{-3}$ in dependency of the DLI mismatch;

Fig. 7 illustrates a simulated eye diagram at the input of the equalizer;

Fig. 8 illustrates the probability density function of the eye diagram in Fig. 7; and

Fig. 9 illustrates the probability density function of the compensated I-component.

The conventional DQPSK receiver in Fig. 1, which suffers from DLI phase mismatch, was already discussed above.

For compensating any unwanted phase offset in the DLIs 1a ant 1b, the invention proposes common electronic pre-processing of I- and Q-components by a joint symbol equalizer.

Fig. 2 illustrates a first embodiment of a DQPSK receiver comprising a joint symbol equalizer which is able to compensate unwanted phase offset in the first and/or second DLIs 1a and 1b. Figurative elements in Figs. 1 and 2 denoted by the same reference signs are the same. In addition to the elements in Fig. 1, the DQPSK receiver in Fig. 2 comprises first weightedly combining means 5a for weightedly combining the un-compensated signal component Xi as generated by the first O/E converter 3a and the un-compensated signal component Xq as generated by the second O/E converter 3b, thereby generating a compensated inphase signal component Yi. Further, second weightedly combining means 5b are provided for weightedly combining the un-compensated signal component Xq as generated by the second O/E converter 3b and the un-compensated signal component Xi as generated by the first O/E converter 3a, thereby generating a compensated quadrature phase signal component Yq. The weighting in the first and second weightedly combining means is selected to compensate unwanted phase offset in the first delay line interferometer and/or second delay line interferometer.

The DQPSK as illustrated in Fig. 2 may be implemented as shown in Fig. 3. Figurative elements in Figs. 2 and 3 denoted by the same reference signs are the same. In the embodiment of Fig. 3 the equalizer uses four weighting units, e.g. simple multipliers. In Fig. 3 the multiplying units 10a and 11b and a combiner 12a are used for implementing the means 5a of Fig. 2. Analogously, in Fig. 3 the multiplying units 10b and 11a and a combiner 12b are used for implementing the means 5b of Fig. 2.

In order to generate a compensated I-component, the receiver comprises the multiplying unit 10a for weighting of the I-component Xi as generated by the first O/E converter 3 a and the multiplying unit 11b for weighting of the Q-component Xq as generated by the second O/E converter 3b. The weighted signals are combined by the combiner 12a. The output signal of combiner 12a forms a compensated I-component Yi. Analogously, in order to generate a compensated Q-component, the receiver comprises a multiplying unit 10b for weighting of the Q-component Xq as generated by the second O/E converter 3b and a multiplying unit 11a for weighting of the I-component Xi as generated by the first O/E converter 3a. The weighted signals are combined by the combiner 12b. The output signal of combiner 12b forms a compensated Q-component Yq. The combiners 12a/b may perform summing or subtracting. This affects the sign of the weighting.

It is assumed that the signal Xi at the output of the O/E converter 3a can be described as a linear superposition of a pure (i.e. not affected by phase mismatch) I-component Xi* and a pure Q-component Xq*. Analogously, it is assumed that the signal Xq at the output of the O/E converter 3b can be described as a linear superposition of a pure Q-component Xq* and a pure I-component Xi*.

$$Xi = a_{11}Xi^* + a_{12}Xq^* \qquad (1)$$

$$Xq = a_{21}Xi* + a_{22}Xq* \quad (2)$$

By solving these linear equations, the pure I-component Xi* and the pure Q-component Xq* result to:

$$Xi* = \frac{a_{22}}{D} \cdot Xi + \frac{-a_{12}}{D} \cdot Xq \quad (3)$$

$$Xq* = \frac{-a_{21}}{D} \cdot Xi + \frac{a_{11}}{D} \cdot Xq, \quad (4)$$

with D = $a_{11}a_{22}$ - $a_{12}a_{21}$

Thus, selecting the weight of multiplying unit 10a to $a_{22}$/D (·const1) and the weight of multiplying unit 11b to -$a_{12}$/D (·const1), the signal at the output of combiner 12a is fully-compensated. Similarly, by selecting the weight of multiplying unit 10b to $a_{11}$/D (·const2) and the weight of multiplying unit 11a to -$a_{21}$/D (·const2), the signal at the output of combiner 12b is fully-compensated.

The multiplying units 10a and 10b are not necessary for compensation and can be omitted (both replaced by a through connection corresponding to a weight of 1). In this case the weights of multiplying units 11a and 11b have to be adapted. Instead of omitting multiplying units 10a and 10b, one may omit multiplying units 11a and 11b (both replaced by a through connection), however, in this case the gain of the remaining multiplying units 10a and 10b is very high.

Preferably, the weights of the multiplying units 10a/b and 11a/b are automatically adapted to the actual DLI phase mismatch by an adaption unit 13. For adaption, the adaption unit 13 may use an LMS algorithm or an error count of a forward-error-correction unit (not shown).

In case the unwanted phase mismatch of the two delays 2a and 2b is symmetrical (i.e. the unwanted phase offsets of the two DLIs have the same absolute value and different signs, e.g. δΦ = 10° offset for the delay 2a and δΦ = -10° for the delay 2b), the weighting of multiplying unit 10a typically corresponds to the weighting of multiplying unit 10b and the weighting of multiplying unit 11a typically correspond to the weighting of multiplying unit 11b.

The simple configuration in Fig. 3 is used to mitigate the DLI phase mismatch but is not able to mitigate PMD (polarization mode dispersion) and other optical and/or electrical distortions.

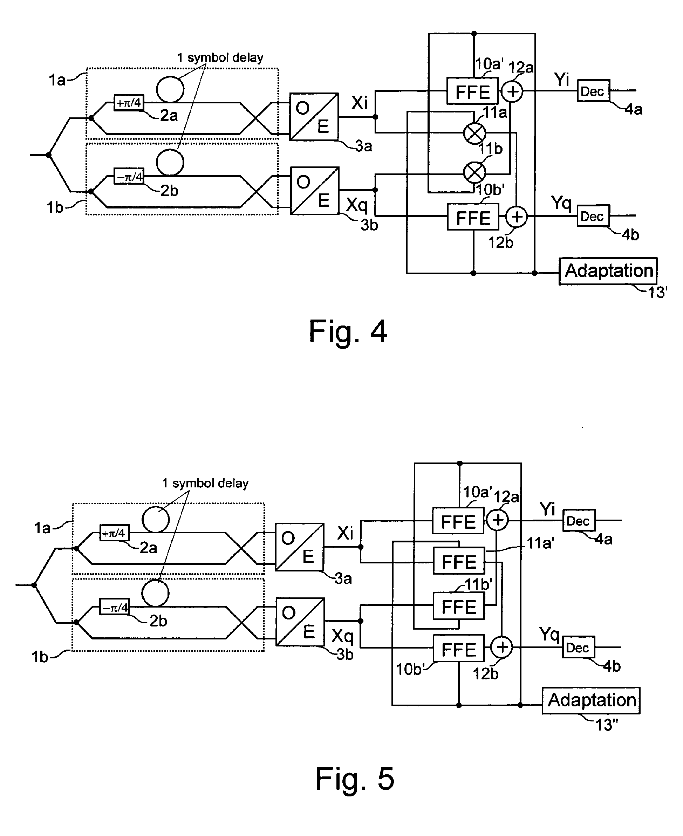

For mitigating PMD or other distortions, the two multipliers 10a/b in Fig. 3 may be replaced by two FFEs 10a' and 10b' as illustrated in Fig. 4. Figurative elements in Figs. 3 and 4 denoted by the same reference signs are the same. The two FFEs 10a' and 10b' can be used to mitigate PMD (polarization mode dispersion) and other optical and/or electrical distortions. The two multipliers 11a and 11b can be used for compensating the DLI phase mismatch. Each of the two FFEs 10a' and 10b' comprise a plurality of weights. E.g. the central weights of the two FFEs may be selected to correspond to the weights of the multiplying units 10a and 10b in Fig. 3.

Further, the two multipliers 11a/b in Fig. 4 may be replaced by two FFEs 11a' and 11b' as illustrated in Fig. 5.

However, it has been figured out that simple multiplying units 11a and 11b in Figs. 3 and 4 are sufficient for compensation of the DLI phase offset. Thus, the use of a single weight for coupling one signal component with the other signal component provides the advantage of less circuit complexity compared to a solution with one FEE 11a'/11b' in each cross path.

As shown in Figs. 3, 4 and 5, the joint-symbol equalizer may comprise four equalizer parts arranged in a butterfly structure which process the complex input signal: In Fig. 3 four multiplying units 10a/b and 11a/b are used. In Fig. 4 two FFEs 10a'/10b' and two multiplying units 11a/b are used. In Fig. 4 four FFEs 10a'/10b' and 11a'/11b' are used.

The two circuits (FFE or multiplier) which feed the same decision circuit 4a/b may be commonly adapted by e.g. an LMS-algorithm or using the error count of a FEC unit. Thus, in Figs. 2-5 two control loops may be used for controlling the weighting.

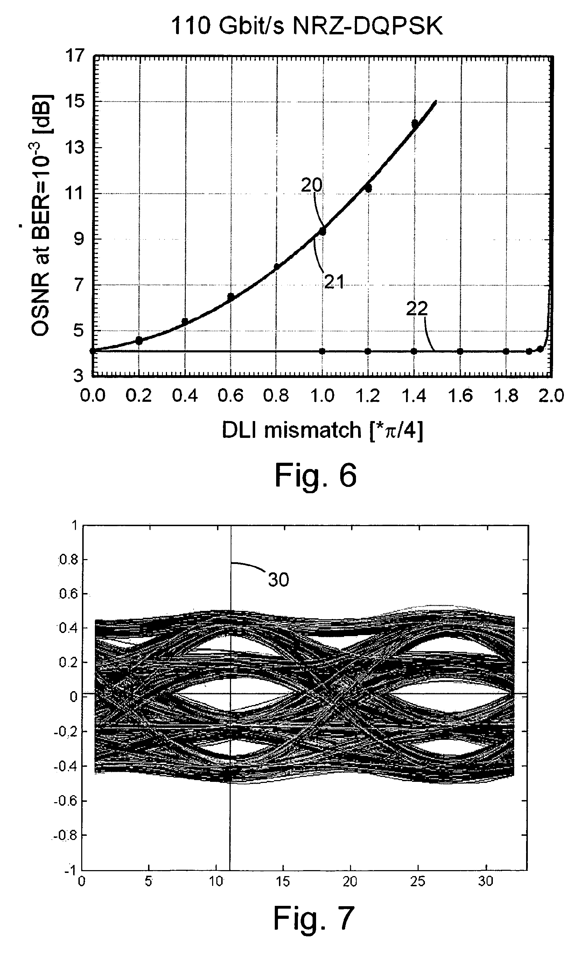

Fig. 6 illustrates the OSNR performance in dependency of the DLI mismatch. Here, an OSNR at a BER of $10^{-3}$ is shown in dependency of the DLI mismatch. The OSNR is a relative OSNR which resulted from simulation. The x-axis of the diagram indicates the total symmetrical DLI mismatch in units of π/4. E.g. The value 1.0 · π/4 on the x-axis corresponds to an unwanted additional offset of 22.5° for the delay 2a (in addition to the wanted delay of +45°) and an unwanted addition offset of -22.5° (in addition to the wanted delay of -45°) for the delay 2b.

Fig. 6 shows three curves 20, 21 and 22:

- the curve 20 indicates the OSNR when using a DQPSK receiver without any equalizer (see Fig. 1);
- the curve 21 (congruent with curve 20, i.e. no improvement) indicates the OSNR when using a DQPSK receiver with a standard equalizer having two FFEs, one for the inphase path and one for the quadrature phase path; and
- the curve 22 indicates the OSNR when using DLI mismatch compensation as shown in the embodiments in Figs. 2-5.

As evident from curve 22, the inventive concept of DLI mismatch compensation allows compensating the OSNR penalty due to DLI mismatch up to a total mismatch near π/2. The DLI mismatch compensation works equally well for all of the three embodiments in Figs. 3-5. Thus, in view of the reduced circuit complexity the weighting by simple multiplying units 11a and 11b (see Figs. 3-4) is preferred in comparison to weighting by more complex FFEs 11a and 11b (see Fig. 5).

Fig. 7 illustrates a simulated distorted eye diagram of the uncompensated I-component at the input of the inventive equalizers in Figs. 2-5. In Fig. 7 the DLI mismatch is $\pi/8$. As evident from Fig. 7, the vertical opening of the eyes is very small. Moreover, a lot of time jitter occurs.

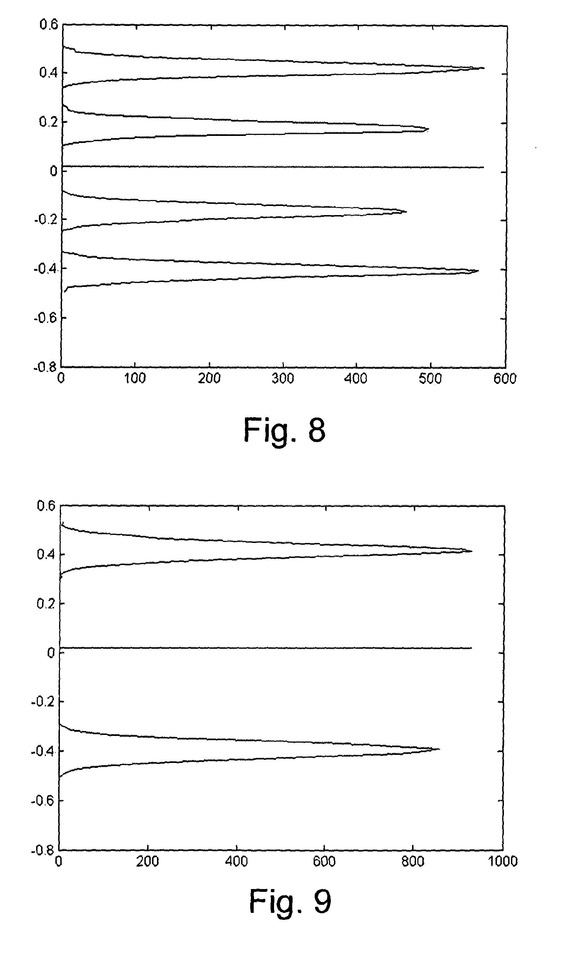

Fig. 8 shows the corresponding probability density function (PDF) at the input of the inventive equalizer. The x-axis indicates the number of samples and the y-axis indicates the signal level. For generating the PDF in Fig. 8, the eye diagram of Fig. 7 was sampled along the line 30 at the maximum eye opening (see line 30 in Fig. 7). As evident from Figs. 7 and 8, the total vertical eye opening corresponds roughly 0.2 signal units.

Fig. 8 shows the PDF of the compensated I-component Yi after compensation. As illustrated in Fig. 8, the total vertical eye opening measures more than 0.6 signal units.

It should be noted that in Figs. 2-5 no analog-to-digital converter is shown upstream of the equalizer circuit elements. In Figs. 1-5 the compensation is performed preferably in the analog domain. However, the inventive DLI compensation may also be realized in the digital domain. In this case, analog-to-digital conversion has to be added upstream of the compensation, e.g. upstream of the blocks 5a and 5b in Fig. 2.

Moreover, it should be noted that additional circuit blocks (e.g. additional amplifiers or equalizer circuits) may be added between the circuit blocks as shown in Figs. 2-5.

**Claims**

1. A DQPSK receiver for receiving an optical signal, the receiver comprising:

   - a first delay line interferometer (1a) for generating a demodulated optical inphase signal component;
   - a second delay line interferometer (1b) for generating a demodulated optical quadrature phase signal component;
   - a first optical-to-electrical converter (3 a) for converting the optical inphase signal component;
   - a second optical-to-electrical converter (3b) for converting the optical quadrature phase signal component;
   - first weightedly combining means (5a) for weightedly combining a signal (Xi) downstream of the first optical-to-electrical converter (3a) and a signal (Xq) downstream of the second optical-to-electrical converter (3b), thereby generating a compensated inphase signal component (Yi);

and
   - second weightedly combining means (5b) for weightedly combining a signal (Xq) downstream of the second optical-to-electrical converter (3b) and a signal (Xi) downstream of the first optical-to-electrical converter (3a), thereby generating a compensated quadrature phase signal component (Yq),

   wherein the weighting in the first (5a) and second (5b) weightedly combining means is selected to compensate unwanted phase offset in the first delay line interferometer (1a) and/or second delay line interferometer (1b).

2. The DQPSK receiver of claim 1, wherein the first weightedly combining means (5a) have for weighting of the signal (Xq) downstream of the second optical-to-electrical converter (3b) a single multiplying unit (11b) having a single weight, and wherein the second weightedly combining means (5b) have for weighting of the signal (Xi) downstream of the first optical-to-electrical converter (3 a) a single multiplying unit (11a) having a single weight.

3. The DQPSK receiver of claim 1, wherein the first weightedly combining means (5a) have for weighting of the signal (Xq) downstream of the second optical-to-electrical converter (3b) a feed forward filter (11b'), and

   wherein the second weightedly combining means (5b) have for weighting of the signal (Xi) downstream of the first optical-to-electrical converter (3 a) a feed forward filter (11a').

4. The DQPSK receiver of claim 2, wherein

   - the multiplying unit (11b) in the first weightedly combining means (5a) is connected to the output of the second optical-to-electrical converter (3b),
   - the multiplying unit (11a) in the second weightedly combining means (5b) is connected to the output of the first optical-to-electrical converter (3a),
   - the first weightedly combining means (5a) further comprises:

      - a first combiner (12a), the first combiner connected to the output of the multiplying unit (11b) in the first weightedly combining means (5a) and the first combiner configured to combine the output signal of the multiplying unit (11b) and a signal downstream of the first optical-to-electrical converter, and

      - the second weightedly combining means (5b) further comprises:

- a second combiner (12b), the second combiner connected to the output of the multiplying unit (11a) in the second weightedly combining means (5b) and the second combiner configured to combine the output signal of the multiplying unit (11a) and a signal downstream of the second optical-to-electrical converter.

5. The DQPSK receiver of claim 1, the receiver further comprising:

- a first decision circuit (4a) receiving the compensated inphase signal component; and
- a second decision circuit (4b) receiving the compensated inphase signal component.

6. The DQPSK receiver of claim 1, wherein the first weightedly combining means (5a) have for weighting of the signal (Xi) downstream of the first optical-to-electrical converter (3 a) a multiplying unit (10a) having a single weight, and

the second weightedly combining means (5b) have for weighting of the signal (Xq) downstream of the second optical-to-electrical converter (3b) a multiplying unit (10b) having a single weight.

7. The DQPSK receiver of claim 1, wherein the first weightedly combining means (5a) have a feed forward filter (10a') receiving the signal (Xi) downstream of the first optical-to-electrical converter (3a), and

the second weightedly combining means (5b) have a feed forward filter (10b') receiving the signal (Xq) downstream of the second optical-to-electrical converter (3b).

8. The DQPSK receiver of claim 1, wherein the receiver is configured to adapt the weighting in the first weightedly combining means (5a) and the weighting in the second weightedly combining means (5b).

9. The DQPSK receiver of claim 8, wherein the receiver is configured to use an LMS algorithm or an error count of a forward-error-correction unit for adaption.

10. An electrical compensation circuit for the DQPSK receiver according to claim 1, the electrical compensation circuit comprising:

- the first weightedly combining means (5a) for weightedly combining a signal (Xi) downstream of the first optical-to-electrical converter (3a) and a signal (Xq) downstream of the second optical-to-electrical converter (3b), thereby generating a compensated inphase signal component (Yi);

and

- the second weightedly combining means (5b) for weightedly combining a signal (Xq) downstream of the second optical-to-electrical converter (3b) and a signal (Xi) downstream of the first optical-to-electrical converter (3 a), thereby generating a compensated quadrature phase signal component (Yq),

wherein the weighting in the first (5a) and second (5b) weightedly combining means is selected to compensate unwanted phase offset in the first delay line interferometer (1a) and/or second (1b) delay line interferometer.

11. A DQPSK receiving method for receiving an optical signal, the method comprising:

- generating a demodulated optical inphase signal component (Xi) by feeding a first delay line interferometer (1a);
- generating a demodulated optical quadrature phase signal component (Xq) by feeding a second delay line interferometer (1b);
- optically-to-electrically converting the optical inphase signal component;
- optically-to-electrically converting the optical quadrature phase signal component;
- weightedly combining an electrical inphase signal component (Xi) and an electrical quadrature phase signal component (Xq), thereby generating a compensated inphase signal component (Yi); and
- weightedly combining an electrical quadrature phase signal component (Xq) and an electrical inphase signal component (Xi), thereby generating a compensated quadrature signal component (Yq),

wherein the weighting is selected to compensate unwanted phase offset in the first delay line interferometer (1a) and/or second delay line interferometer (1b).

**(prior art)**

# Fig. 1

# Fig. 2

# Fig. 3

Fig. 4

Fig. 5

## 110 Gbit/s NRZ-DQPSK

Fig. 6

Fig. 7

Fig. 8

Fig. 9

Europäisches
Patentamt

European
Patent Office

Office européen
des brevets

# EUROPEAN SEARCH REPORT

Application Number

EP 08 29 0691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU ET AL.: "DSP-Enabled Compensation of Demodulator Phase Error and Sensitivity Improvement in Direct-Detection 40-Gb/s DQPSK" EUROPEAN CONFERENCE ON OPTICAL COMMUNICATION, ECOC 2006, POST-DEADLINE PAPER TH.4.4.5., 24 September 2006 (2006-09-24), - 28 September 2006 (2006-09-28) XP002507623 * the whole document * | 1-8,10, 11 | INV. H04B10/158 |
| Y | | 9 | |
| Y | US 2006/067703 A1 (HAUNSTEIN HERBERT [DE] ET AL) 30 March 2006 (2006-03-30) * the whole document * | 9 | |
| A | | 1-8,10, 11 | |
| A | EP 1 816 763 A (FUJITSU LTD [JP]) 8 August 2007 (2007-08-08) * figures 55,60,61,63,67,71,72,74,77-80,84-86 * | 1-11 | |
| A | US 2008/056733 A1 (ISOMURA AKIHIKO [JP] ET AL) 6 March 2008 (2008-03-06) * paragraphs [0004] - [0018] * * paragraphs [0031] - [0034] * * figure 2 * | 1-11 | TECHNICAL FIELDS SEARCHED (IPC) H04B |
| A | US 7 389 055 B1 (RICKARD ROBIN [GB] ET AL) 17 June 2008 (2008-06-17) * abstract * * column 3, line 40 - column 5, line 13 * * column 6, lines 23-42 * * figure 3 * | 1-11 | |

The present search report has been drawn up for all claims

| Place of search | Date of completion of the search | Examiner |
|---|---|---|
| Munich | 11 December 2008 | Rolan Cisneros, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 29 0691

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2008

| Patent document cited in search report | | Publication date | Patent family member(s) | | Publication date |
|---|---|---|---|---|---|
| US 2006067703 | A1 | 30-03-2006 | NONE | | |
| EP 1816763 | A | 08-08-2007 | NONE | | |
| US 2008056733 | A1 | 06-03-2008 | JP 2008060857 | A | 13-03-2008 |
| US 7389055 | B1 | 17-06-2008 | NONE | | |

EPO FORM P0459

For more details about this annex : see Official Journal of the European Patent Office, No. 12/82